# EUROPÄISCHE PATENTSCHRIFT

(11) **EP 0 744 554 B1**
(45) Veröffentlichungstag und Bekanntmachung des Hinweises auf die Patenterteilung: **22.01.2003**
(21) Anmeldenummer: 96106246.0
(22) Anmeldetag: 20.04.1996
(51) Int. Cl.: F15B 15/08

(54) **Kupplungseinrichtung für Linearantriebe**
Coupling device for linear actuators
Dispositif d'accouplement pour actionneurs linéaires

(30) Priorität: 24.05.1995 DE 29508663 U
(43) Veröffentlichungstag der Anmeldung: 27.11.1996
(73) Patentinhaber: FESTO AG & Co, 73734 Esslingen (DE)
(72) Erfinder: Stoll, Kurt, Dr., 73732 Esslingen (DE); Volzer, Johannes, 72535 Heroldstatt (DE)
(74) Vertreter: Abel, Martin, Dipl.-Ing.

(56) Entgegenhaltungen:
- EP-A- 0 033 541
- EP-A- 0 234 033
- EP-A- 0 582 782

## Beschreibung

Die Erfindung betrifft eine Kupplungseinrichtung für Linearantriebe, zur Kopplung des eine Linearbewegung in einer Axialrichtung ausführenden Antriebsteils des Linearantriebes mit einem an einer Längsführung parallel zur Bewegungsrichtung des Antriebsteils längsbeweglich geführten Führungsteil, mit einem mit dem Antriebsteil verbundenen oder von diesem gebildeten Krafteinleitungsteil, und mit einem mit dem Führungsteil verbundenen oder von diesem gebildeten Kraftabgabeteil, wobei das Krafteinleitungsteil und das Kraftabgabeteil über ein dazwischengeschaltetes Koppelglied in Axialrichtung bewegungsgekoppelt sind.

Maschinen oder sonstige Einrichtungen verfügen häufig über an Längsführungen gelagerte Führungsteile, an denen zu bestimmten Zwecken zu bewegende Bauteile angebracht sind. Beispielsweise kann es sich um Transportschlitten handeln, die mit zu positionierenden Werkstücken bestückbar sind. Die Bewegung des Führungsteils wird über Linearantriebe erzeugt, die beispielsweise elektrisch oder pneumatisch betätigt werden. Beispiele für solche Linearantriebe sind fluidbetätigte Arbeitszylinder, die häufig auch in kolbenstangenloser Bauform ausgeführt sind, wie sie beispielsweise in der DE 41 37 789 C2 oder in der EP-A-0 234 033 beschrieben sind.

Zur Herstellung der Antriebsverbindung. wird das zu bewegende, außerhalb des Linearantriebes geführte Führungsteil mit dem Antriebsteil des Liniearantriebes gekoppelt, das im Betrieb eine axial gerichtete Linearbewegung ausführt. Dabei ist es erforderlich, den Linearantrieb exakt parallel zu der Längsführung zu installieren, um durch Fluchtungsfehler bedingte Verschleißerscheinungen gering zu halten. Aufgrund von Fertigungs- und Montagetoleranzen läßt sich eine exakt fluchtende Ausrichtung jedoch nur sehr schwer verwirklichen. Man hat daher schon vorgeschlagen, eine Kupplung zwischen dem Führungsteil und dem Antriebsteil zwischenzuschalten, die einen selbsttätigen Fluchtungsfehlerausgleich vornimmt. Diese Kupplung besitzt ein mit dem Antriebsteil verbundenes Krafteinleitungsteil, an dem über einen als Koppelglied fungierenden Querbolzen ein Kraftabgabeteil angeordnet ist, das sich an dem geführten Führungsteil befestigen läßt. Durch spielbehafteten Einbau des Koppelgliedes kann das Kraftabgabeteil relativ zu dem Krafteinleitungsteil Querbewegungen ausführen, die die Fluchtungsfehler kompensieren. Von Nachteil ist dabei allerdings, daß die Verbindung auch in Axialrichtung, d.h. in Richtung der Linearbewegung spielbehaftet ist und eine exakte axiale Positionierung des Führungsteils unmöglich macht. Vor allem bei servopneumatischen Anwendungen führen bereits einige Zehntel Millimeter axiales Spiel zu äußerst negativen Einflüssen auf die Regelgüte mit Instabilitäten im Regelkreis. Aufwendige sphärische oder kardanische Verbindungen könnten zwar zur Vermeidung des Axialspieles beitragen, sind jedoch relativ voluminös und teuer.

Es ist daher die Aufgabe der vorliegenden Erfindung, eine Kupplungseinrichtung der eingangs genannten Art zu schaffen, die bei kostengünstigem Aufbau einen Fluchtungsfehlerausgleich bei gleichzeitig praktisch Spielfreiheit in axialer Richtung ermöglicht.

Zur Lösung dieser Aufgabe ist vorgesehen, daß als Koppelglied ein längliches in wenigstens einer Querrichtung federelastisch biegbares und bei Beaufschlagung in seiner Längsrichtung unnachgiebiges Federglied vorgesehen ist, das zumindest im wesentlichen in der Axialrichtung ausgerichtet ist, und das an einer ersten Verbindungsstelle an dem Krafteinleitungsteil und an einer zweiten Verbindungsstelle an dem Kraftabgabeteil jeweils in der Axialrichtung unbeweglich festgelegt ist, wobei die beiden Verbindungsstellen (25, 26) axial beabstandet zueinander angeordnet sind, so dass auf Grund der Biegeelastizität des Federgliedes (28) relative Querbewegungen zwischen dem Krafteinleitungsteil (13) und dem Kraftabgabeteil (17) möglich sind.

Auf diese Weise wird durch die Querbiegbarkeit des Koppelgliedes eine die vorhandenen Fluchtungsfehler ausgleichende Relativbewegung zwischen dem Krafteinleitungsteil und dem Kraftabgabeteil ermöglicht, die keinerlei axiales Spiel hervorruft. Die gewünschten Biegefreiheitsgrade können dabei durch entsprechende Gestaltung des Federgliedes beeinflußt und vorgegeben werden. In der Regel wird man ein Federglied vorsehen, das wenigstens in der Richtung radial zur Axialrichtung der Linearbewegung biegbar ist und dadurch eventuelle Abweichungen im Radialabstand kompensiert. Die axial unnachgiebige Ausgestaltung des Federgliedes gewährleistet eine direkte und unverfälschte Übertragung sowohl von Zugkräften als auch von Druck- bzw. Schubkräften zwischen dem Krafteinleitungsteil und dem Kraftabgabeteil, so daß axial gerichtete Relativbewegungen ausgeschaltet sind. Unter Verwendung einer derartigen Kupplungseinrichtung ist eine exakte Positionierung des angekoppelten Führungsteils möglich, wobei sich eine sehr gute Regelgüte einstellt.

Vorteilhafte Weiterbildungen der Erfindung sind in den Unteransprüchen aufgeführt.

In bevorzugter Ausgestaltung besteht das Federglied aus einer plattenartigen, ausschließlich quer zur Plattenebene biegbaren Anordnung, wobei das Federglied zweckmäßigerweise so ausgerichtet ist, daß die mögliche Biegerichtung radial verläuft. In diesem Falle werden radiale Fluchtungsfehler ohne weiteres spielfrei durch die Biegbarkeit des Federgliedes ausgeglichen.

Um Ausgleichsbewegungen in anderen Querrichtungen zu ermöglichen, sieht eine zweckmäßige Ausgestaltung vor, daß das Federglied an den beiden Verbindungsstellen jeweils gelenkig an dem zugeordneten Teil, also an dem Kraftabgabeteil oder an dem Krafteinleitungsteil, gelagert ist. Die Gelenkachsen verlaufen zweckmäßigerweise parallel zur Ebene der möglichen Querbiegebewegung des Federgliedes. Die gelenkige Lagerung kann praktisch spielfrei ausgeführt werden, indem beispielsweise spielfrei eingepaßte Bolzengelenke zur Anwendung kommen. Indem an beiden Verbindungsstellen eine derartige Gelenkverbindung vorhanden ist, können sich das Krafteinleitungsteil und das Kraftabgabeteil quer zur Biegeebene des Federelementes beliebig unabhängig voneinander verlagern, um eventuellen Fluchtungsfehlern Rechnung zu tragen.

Um sowohl die gewünschte Biegbarkeit in Querrichtung als auch die geforderte Steifigkeit in Längsrichtung zu erhalten, ist als Federglied zweckmäßigerweise eine Anordnung vorgesehen, die ein plattenartiges Federband umfaßt, das von Hause aus über die geforderte elastische Querbiegbarkeit verfügt, und das durch Belegung mit Versteifungsplatten mit der erforderlichen Zug- und Drucksteifigkeit ausgestattet wird. Lokale Zwischenräume zwischen benachbarten Versteifungsplatten geben Bereiche vor, in denen das Federglied weiterhin biegbar ist, deren in Längsrichtung gemessene Breite jedoch auf ein Maß beschränkt bleibt, das bei Druckbeaufschlagung eine Stauchung des Federbandmaterials verhindert. Auf diese Weise liegen praktisch integrierte Festkörpergelenke vor, die die axiale Zug- und Druckfestigkeit des Federgliedes nicht beeinträchtigen.

Da das Krafteinleitungsteil und das Kraftabgabeteil jeweils nur an besagter Verbindungsstelle mit dem Federglied in fester Verbindung stehen, hat es sich als empfehlenswert erwiesen, die drei Bestandteile zusätzlich durch eine Stabilisierungsmasse aus gummielastisch nachgiebigem Material miteinander zu verbinden, um der formgebundenen Gesamtanordnung eine ausreichende Stabilität zu verleihen. Die Stabilisierungsmasse kann auch für eine definierte Grundstellung zwischen den einzelnen Bestandteilen sorgen und die Montage erleichtern. Außerdem kann sie zur Abdichtung der gegebenenfalls vorhandenen Gelenkbereiche an den Verbindungsstellen dienen.

Nachfolgend wird die Erfindung anhand der beiliegenden Zeichnung näher erläutert. In dieser zeigen:
- Figur 1: eine erste Bauform der erfindungsgemäßen Kupplungseinrichtung im Betrieb, wobei ausschnittsweise ein Linearantrieb und eine externe Längsführung gezeigt sind,
- Figur 2: die Kupplungseinrichtung gemäß Figur 1 in perspektivischer, teilweiser aufgebrochener Einzeldarstellung, wobei die Stabilisierungsmasse der besseren übersichtlichkeit halber nicht gezeigt ist,
- Figur 3: die Kupplungseinrichtung aus Figur 2 im Längsschnitt gemäß Schnittlinie III-III aus Figur 4,
- Figur 4: die Kupplungseinrichtung aus Figur 2 im Querschnitt gemäß Schnittlinie IV-IV aus Figur 3,
- Figur 5: eine Draufsicht auf die Kupplungseinrichtung mit Blick gemäß Pfeil V aus Figur 3,
- Figur 6: eine Unteransicht der Kupplungseinrichtung mit Blickrichtung gemäß Pfeil VI aus Figur 3,
- Figur 7: das beim Ausführungsbeispiel verwendete Kopplungsglied in der Ausgangsstellung und in einer übertrieben und strichpunktiert dargestellten ausgelenkten Stellung, und
- Figur 8: die Kupplungseinrichtung in Draufsicht analog Figur 5 in einer übertrieben dargestellten, durch Fluchtungsfehler hervorgerufene verschwenkten Relativstellung zwischen den einzelnen Bestandteilen.

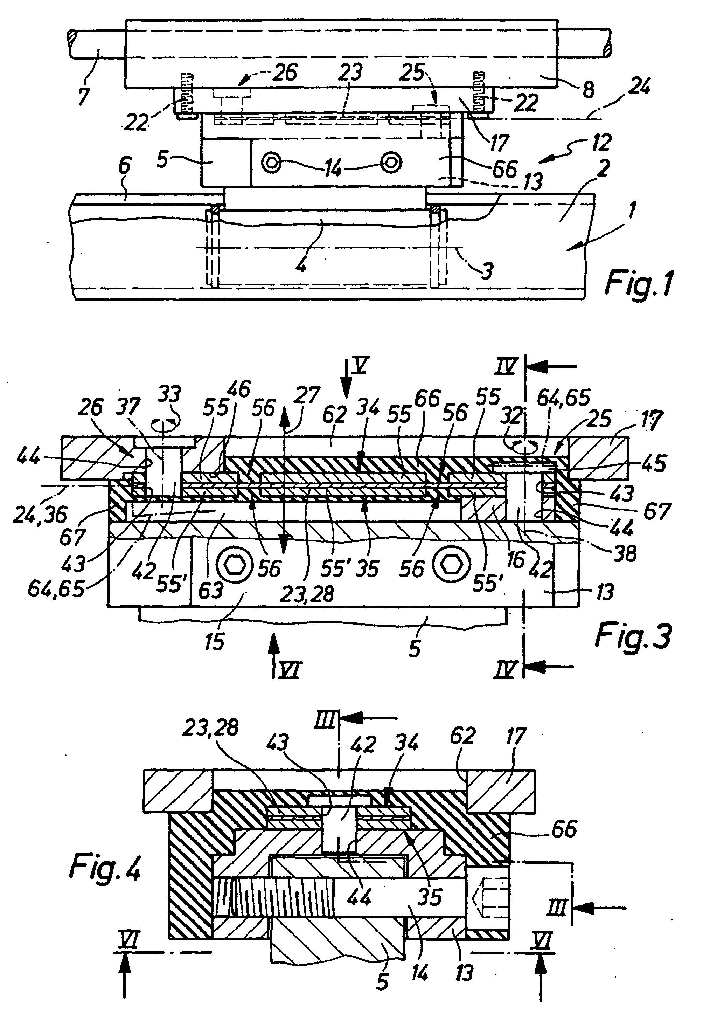

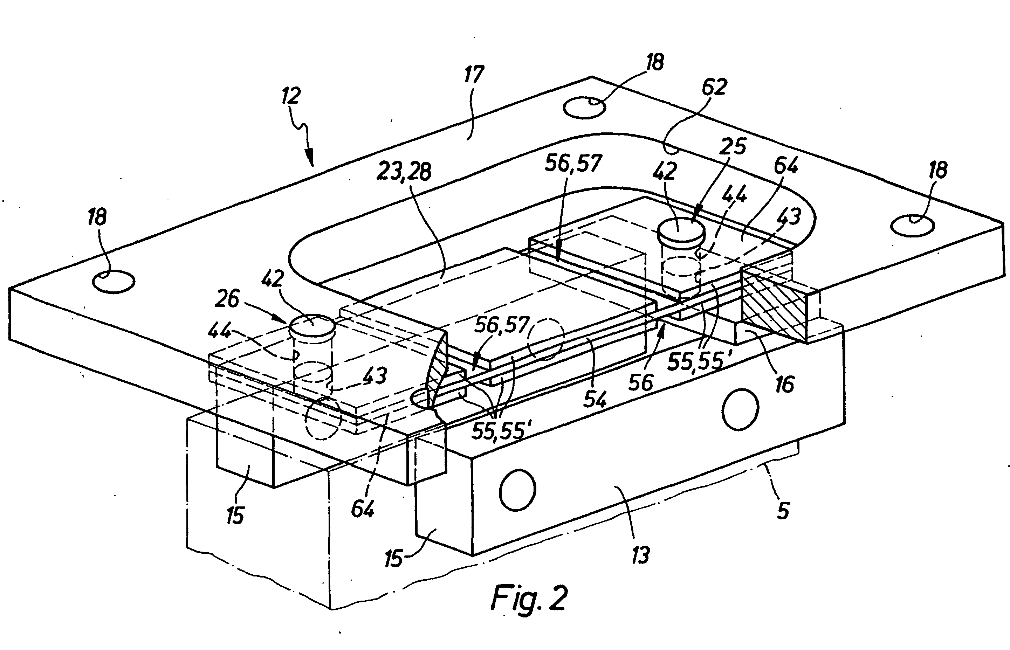

Die Figur 1 zeigt einen Längenabschnitt eines an sich bekannten Linearantriebes 1, dessen Bauform beispielsweise der in der DE 41 37 789 C2 beschriebenen entsprechen kann. Es handelt sich hier um einen kolbenstangenlosen pneumatisch betätigten Linearantrieb 1 mit einem Gehäuse 2, das über einen abgedichteten Längsschlitz 6 verfügt. In dem Gehäuse 2 ist ein durch Druckbeaufschlagung zu einer Linearbewegung in Axialrichtung 3 antreibbares Antriebsteil 4 angeordnet, hier ein Kolben. Es könnte sich auch um einen elektromotorisch betätigten Linearantrieb handeln, in welchem Falle das Antriebsteil 4 z.B. durch einen Zahnriemen bewegt wird.

Der im Gehäuse 2 angeordnete Abschnitt des Antriebsteils 4 steht über eine den Längsschlitz 6 durchsetzende Stegpartie mit einer außerhalb des Gehäuses 2 angeordneten Mitnehmerpartie 5 in fester Verbindung. Sie wird bei der Linearbewegung des Antriebsteils 4 synchron mitbewegt.

Der Linearantrieb 1 ist auf nicht näher dargestellte Weise an einer Maschine installiert, die über eine aus Figur 1 ersichtliche und beispielsweise von einer Stangenführung gebildete Längsführung 7 verfügt. Diese verläuft parallel zu der Längsachse bzw. Axialrichtung 3 des Linearantriebes 1. An ihr ist ein z.B. schlittenartiges Führungsteil 8 längsbeweglich gelagert. Das Führungsteil 8 ist Bestandteil eines nicht näher gezeigten Führungsschlittens, der während des Betriebes der nicht näher gezeigten Maschine eine Linearbewegung entlang der Längsführung 7 auszuführen hat.

Die Linearbewegung des Führungsteils 8 wird durch den Linearantrieb 1 erzeugt. Zu diesem Zweck ist das Antriebsteil 4 an das Führungsteil 8 fest angekoppelt. Zur Kopplung dient die hier in bevorzugter Bauweise gezeigte erfindungsgemäße Kupplungseinrichtung 12.

Die beispielsgemäße Kupplungseinrichtung 12 verfügt über ein Krafteinleitungsteil 13, das hier mit Hilfe einer Schraubverbindung 14 lösbar fest an der Mitnehmerpartie 5 des Antriebsteils 4 angebracht ist. In Draufsicht gesehen hat das Krafteinleitungsteil 13 eine U-förmige Gestalt mit zwei parallel zueinander verlaufenden Lagerschenkeln 15, die die leistenförmige Mitnehmerpartie 5 zwischen sich aufnehmen. An ihrer Rückseite sind die beiden Lagerschenkel 15 durch einen Quersteg 16 starr miteinander verbunden, der bei montierter Kupplungseinrichtung 12 auf der dem Gehäuse 2 abgewandten Oberseite der Mitnehmerpartie 5 aufliegt. Die Schraubverbindung 14 verfügt über die Mitnehmerpartie 5 durchsetzende Klemmschrauben, die zumindest teilweise in der Lage sind, die Lagerschenkel 15 gegen die Seitenflächen der Mitnehmerpartie 5 zu pressen und dadurch für eine form- und kraftschlüssige spielfreie Verbindung zu sorgen.

Auf dem Krafteinleitungsteil 13, an dessen der Mitnehmerpartie 5 entgegengesetzter Seite, ist ein Kraftabgabeteil 17 der Kupplungseinrichtung 12 angeordnet. Es steht in lösbarer fester spielfreier Verbindung mit dem Führungsteil 8. Beispielsgemäß ist es von einer Platte gebildet, die über mehrere Durchbrechungen 18 verfügt, die eine Befestigung an dem Führungsteil 8 mit Hilfe einer Schraubverbindung 22 ermöglichen.

Radial bezogen auf die Längsachse bzw. Axialrichtung 3 ist zwischen das Krafteinleitungsteil 13 und das Kraftabgabeteil 17 ein Koppelglied 23 zwischengeschaltet, über das die beiden Teile in Axialrichtung 3 bewegungsgekoppelt sind. Das Koppelglied 23 ist ein Teil mit Längserstreckung, das in Axialrichtung 3 ausgerichtet ist, so daß seine Längsachse 24 in der aus Figuren 1 bis 6 hervorgehenden Ausgangsstellung parallel zu der Axialrichtung 3 verläuft.

An einer dem rückwärtigen Bereich der Kupplungseinrichtung 12 zugeordneten ersten Verbindungsstelle 25 ist das Koppelglied 23 an dem Krafteinleitungsteil 13 axial unbeweglich festgelegt. Mit axial gemessenem Abstand hierzu, an einer zweiten Verbindungsstelle 26, ist das Koppelglied 23 weiterhin ebenfalls axial unbeweglich an dem Kraftabgabeteil 17 befestigt. Weitere zur Übertragung von Kräften dienende Verbindungsstellen sind nicht vorgesehen.

Das Koppelglied 23 ist derart ausgebildet und angeordnet, daß es in der Lage ist, an den Verbindungsstellen 25, 26 in Axialrichtung eingeleitete Zugkräfte und Druck- bzw. Schubkräfte zwischen den beiden Teilen 13, 17 verlustfrei und direkt zu übertragen. Auf diese Weise ist gewährleistet, daß die Bewegung des Antriebsteils 4 praktisch ohne Abweichung auf das Führungsteil 8 weitergegeben wird. Darüberhinaus kann das Koppelglied 23 Fluchtungsfehler zwischen dem Linearantrieb 1 und der Längsführung 7 ausgleichen, die dadurch herrühren, daß bei der Fertigung und/oder Montage dieser Einrichtungen sowie deren Teilen eine absolute Parallellage mit vertretbarem Aufwand nicht erzielbar ist. Defacto laufen also das Antriebsteil 4 und das Führungsteil 8 im Betrieb nicht exakt parallel, ihre in Querrichtung relativ zueinander eingenommenen Positionen ändern sich laufend. Durch die Kupplungseinrichtung 12 wird eben in diesen Querrichtungen eine gewisse Entkopplung erzielt, die Relativbewegungen zwischen den Einrichtungen in Querrichtung ermöglicht, so daß verschleißfördernde Verspannungen ausbleiben.

Um die gewünschten Eigenschaften zu erhalten, ist als Koppelglied 23 ein längliches, in wenigstens einer Querrichtung 27 federelastisch biegbares und in seiner Längsrichtung 24 unnachgiebiges Federglied 28 vorgesehen. Die axiale Zug- und Drucksteifigkeit gewährleistet eine Kraftübertragung ohne unregelmäßige Querverformungen, während gleichzeitig die Querelastizität eine Änderung der Relativlage zwischen dem Krafteinleitungsteil 13 und dem Kraftabgabeteil 17 ermöglicht.

Beim Ausführungsbeispiel ist das Federglied 28 derart ausgebildet, daß lediglich in einer bestimmten Querrichtung 27 bei den auftretenden Belastungen eine Biegbarkeit gegeben ist. Diese mögliche Biegebewegung 27 ist radial bezüglich der Längsachse bzw. Axialrichtung 3 gerichtet. Mit anderen Worten, das Federglied 28 ist in der Lage, sich in Richtung zu dem Führungsteil 8 und dem Antriebsteil 4 elastisch rückfedernd zu verbiegen. Auf diese Weise ist ein erster Freiheitsgrad für die Fluchtungsfehler-Ausgleichsbewegung gegeben.

Es wäre denkbar, als Federglied 28 beispielsweise eine Stabfeder oder dergleichen zu verwenden, die in alle Querrichtungen gleichermaßen biegeelastisch ist. Sie könnte an den Verbindungsstellen 25, 26 starr fixiert werden und würde, mit Ausnahme einer axialen Realtivbewegung, alle anderen erforderlichen Relativbewegungen zwischen den beiden Teilen 13, 17 zulassen. Bevorzugt ist jedoch eine aus der Zeichnung ersichtliche Ausgestaltung vorgesehen, bei der nur der schon erwähnte Freiheitsgrad 27 durch die Biegbarkeit des Materials gewährleistet ist. Zwei weitere Freiheitsgrade 32, 33, bei denen es sich um DrehFreiheitsgrade handelt, werden durch die Art und Weise der Verbindung zwischen dem Federglied 28 und dem Krafteinleitungsteil 13 bzw. dem Kraftabgabeteil 17 definiert. Über andere Freiheitsgrade verfügt das beispielsgemäße System nicht.

Zur Gewährleistung der erwähnten Freiheitsgrade 27, 32, 33 ist das Federglied 28 als länglich plattenartige Anordnung gestaltet, die man auch als leistenförmig bezeichnen könnte. In der Ausgangsstellung erstreckt sich das Federglied 28 in einer Ebene, die parallel zur Axialrichtung 3 verläuft. Das Federglied 28 ist derart zwischen dem Krafteinleitungsteil 13 und dem Kraftabgabeteil 17 angeordnet, daß die eine obere Plattenfläche 34 dem Kraftabgabeteil 17 und die entgegengesetzte untere Plattenfläche 35 dem Krafteinleitungsteil 13 zugewandt ist. Eine gedankliche, sich durch die Längsachse 24 erstreckende und rechtwinkelig zur Plattenebene 36 des Federgliedes 28 ausgerichtete Ebene geht im vorliegenden Falle durch die Längsachse bzw. Axialrichtung 3 des Gehäuses 2 hindurch, bezüglich derer sie parallel verläuft.

Die beiden Verbindungsstellen 25, 26 sind den axialen Endbereichen des Federgliedes 28 zugeordnet. Dort ist das Federglied 28 zur Gewährleistung der beiden Schwenk-Freiheitsgrade 32, 33 jeweils gelenkig, jedoch praktisch spielfrei am jeweils zugeordneten Teil 13, 17 gelagert. Die Lagerung ist dergestalt, daß jeweils eine Dreh- bzw. Gelenkachse definiert wird, die sowohl zueinander als auch mit Bezug zu der Ebene der möglichen Querbiegebewegung 27 des Federgliedes 28 parallel verlaufen. Sie stehen beispielsgemäß rechtwinkelig zur Plattenebene 36.

Um eine spielfreie Gelenkverbindung zu erhalten, sind die Gelenklagerungen als spielfrei eingepaßte Bolzengelenke ausgeführt. Das Federglied 28 ist mit jedem Teil 13, 17 über einen Gelenkbolzen 42, dessen Längsachse die Gelenkachse 37, 38 vorgibt, verbunden. Das Federglied 28 verfügt an den beiden Verbindungsstellen 25, 26 jeweils über ein quer zur Plattenebene 36 durchgehendes Loch 43, dem ein fluchtendes Loch 44 am jeweils zugeordneten Teil 13, 17 gegenüberliegt. Jede Lochpaarung 43, 44 ist von einem Gelenkbolzen 42 zumindest teilweise durchsetzt. Die Verbindung zwischen dem Gelenkbolzen 42 und jeweils einem Loch der zugeordneten Lochpaarung 43, 44 ist eine Übergangspassung, die Verbindung zu dem jeweils anderen Loch ist eine Presspassung.

An der ersten Verbindungsstelle 25 ist der mit einem Kopf 45 versehene Gelenkbolzen 42 von oben außen her im Rahmen einer Übergangspassung durch das Loch 43 des Federgliedes 28 hindurchgeführt und mit seinem freien Ende im Rahmen einer Presspassung in dem in dem Quersteg 16 ausgebildeten Loch 44 des Krafteinleitungsteils 13 festgelegt. Der Endbereich des Federgliedes 28 ist zwischen dem Kopf 45 und dem Quersteg 16 in Richtung der zugeordneten Gelenkachse 38 spielfrei gehalten. In Folge der Übergangspassung hat das Federglied 28 jedoch die Möglichkeit, sich entsprechend dem Schwenk-Freiheitsgrad 33 zumindest begrenzt bzw. geringfügig gegenüber dem Krafteinleitungsteil 13 zu verdrehen.

An der zweiten Verbindungsstelle 26 ist der Gelenkbolzen 42 von oben außen her zunächst durch das Loch 44 im vorderen Endbereich des plattenartigen Kraftabgabeteils 17 hindurchgeführt, wobei eine Übergangspassung vorliegt. Der nach unten zum Krafteinleitungsteil 13 überstehende Endabschnitt des Gelenkbolzens 42 ist im Rahmen einer Presspassung in das zugeordnete Loch 43 des Federgliedes 28 eingesetzt. Das Federglied 28 liegt mit seiner oberen Plattenfläche 34 spielfrei an der Unterseite des Kraftabgabeteils 17 an. Dabei kann das Federglied 28 zumindest teilweise in einer nach unten offenen Aussparung 46 des Kraftabgabeteils 17 aufgenommen sein, wobei allerdings randseitig ein umlaufender Spalt 47 zwischen dem Federglied 28 und den seitlichen Begrenzungsflächen der Aussparung 46 vorliegt. Auf diese Weise sind zwischen dem Kraftabgabeteil 17 und dem Federglied 28 begrenzte Drehbewegungen um die zugeordnete Gelenkachse 37 möglich, die den zweiten Schwenkfreiheitsgrad 33 vorgeben.

Um eine ausreichende Beweglichkeit des Federgliedes 28 gegenüber dem Kraftabgabeteil 17 zu gewährleisten, kann das Federglied an den Ecken abgerundet sein und der Spalt 47 wird ausreichend groß dimensioniert.

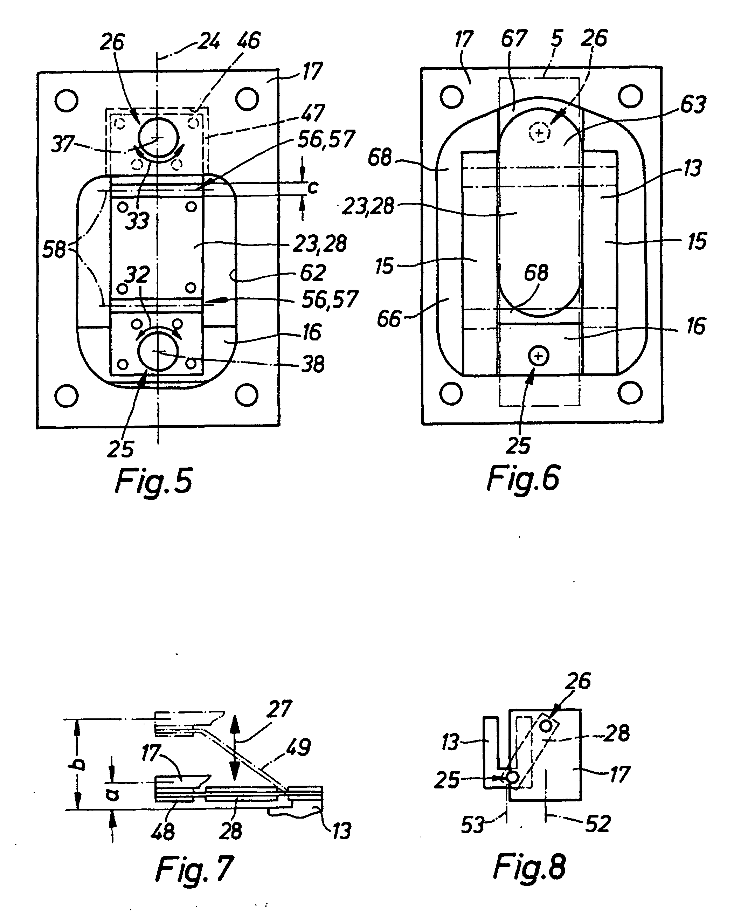

Somit sind durch die Biegeelastizität des Federgliedes 28 relative Querbewegungen zwischen dem Kraftabgabeteil 17 und dem Krafteinleitungsteil 13 möglich, im Rahmen derer die beiden Teile ihren rechtwinkelig zur Plattenebene 36 gemessenen Abstand zueinander variieren können. Es sind sowohl Parallelverlagerungen als auch solche Verlagerungen möglich, bei denen die beiden Teile ihre relative Parallellage verlassen und eine beliebige Winkellage zueinander einnehmen. Zur beispielsgemäßen Illustration wird auf Figur 7 verwiesen, die zum einen die Ausgangsstellung 48 und zum anderen eine strichpunktiert angedeutete ausgelenkte Stellung 49 des Federgliedes 28 zeigt, bei denen unterschiedliche Abstände a, b zwischen den beiden Teilen 13, 17 vorliegen. Es handelt sich hier um eine übertriebene Darstellung, in Realität werden sich die Querbewegungen im Millimeterbereich bzw. im Zehntelsmillimeterbereich abspielen.

In Folge der Schwenk-Freiheitsgrade 32, 33 können relative Drehbewegungen zwischen dem Kraftabgabeteil 17 und dem Federglied 28 einerseits sowie zwischen dem Federglied 28 und dem Krafteinleitungsteil 13 andererseits stattfinden. Dies erlaubt einen Fluchtungsfehlerausgleich in der Ebene des Federgliedes 28, d.h. rechtwinkelig zur Ebene der Querbiegebewegung des Federgliedes 28. Die Schwenk-Freiheitsgrade 32, 33 sind völlig unabhängig voneinander. Ermöglicht sind dadurch beispielsweise seitliche Parallelverschiebungen der beiden Teile 13, 17, im Rahmen derer ein seitlicher Parallelversatz stattfindet, wie es in Figur 8 angedeutet ist. Die Darstellung ist auch hier stark übertrieben, um das Wirkprinzip zu verdeutlichen. Möglich sind jedoch auch Schwenkbewegungen um die Achsen 37, 38, die den Effekt haben, daß die Längsachsen 52, 53 der beiden Teile 13, 17 nicht mehr, wie in Figur 8 gezeigt, parallel zueinander stehen, sondern einen geringen spitzen Winkel zueinander einschließen.

Da die Schwenkfreiheitsgrade unabhängig von der momentanen Biegeauslenkung des Federgliedes 28 sind, können sich sämtliche Freiheitsgrade beliebig überlagern. Dies gewährleistet eine selbsttätige Kompensation eventueller Fluchtungsfehler, die Kupplungseinrichtung 12 ist in der Lage, Querabweichungen in der Parallellage zwischen dem Führungsteil 8 und dem Antriebsteil 4 problemlos auszugleichen.

Der große Vorteil dieser Anordnung liegt darin, daß der Fluchtungsfehlerausgleich praktisch keinen Einfluß auf die relative Axialposition zwischen dem Führungsteil 8 und dem Antriebsteil 4 hat. Die Kupplungseinrichtung 12 gewährleistet in jeder Betriebsstellung eine axial spielfreie Verbindung zwischen den angesetzten Teilen.

Zur Gewährleistung der gewünschten Steifigkeit in Längsrichtung 24 und gleichzeitig der gewünschten Biegefähigkeit in Querrichtung 27 verfügt das beispielsgemäße Federglied 28 über eine bandartig dünne, insbesondere aus Federstahl bestehende Federplatte 54, die über die gesamte axiale Länge durchgeht. Diese Federplatte 54 verfügt über die gewünschte Biegeelastizität, und kann in Zugrichtung sehr hohe Kräfte aufnehmen. Auch in Druckrichtung ist aus Sicht der Druckspannungen eine hohe Sicherheit vorhanden, allerdings würde entsprechend des zu ungünstigen Schlankheitsgrades (Euler) bei Druckbelastungen trotzdem die Gefahr eines Ausbauchens in Querrichtung bestehen, was unter anderem relative Axialbewegungen zwischen dem Krafteinleitungsteil 13 und dem Kraftabgabeteil 17 zur Folge haben könnte. Um dies auszuschließen, ist die Federplatte 54 an beiden größerflächigen Seiten mit mehreren Versteifungsplatten 55, 55' belegt, die beispielsweise im Rahmen von Nietverbindungen, Punktschweißverbindungen oder Klebeverbindungen festgelegt sind. Versteifungsplatten 55, 55' beider Seiten sind einander jeweils paarweise zugeordnet. Vorliegend befinden sich auf jeder Seite drei Versteifungsplatten 55, 55', und zwar zwei endseitige und eine mittlere Versteifungsplatte. Die Versteifungsplatten 55, 55' bedecken fast die gesamte Oberfläche der Federplatte 54. Axial unmittelbar aufeinanderfolgende Versteifungsplatten 55 sind jedoch mit Abstand zueinander angeordnet, so daß unbelegte und somit unverstärkte Federplattenbereiche 56 entstehen, im vorliegenden Falle liegen auf jeder Federplattenseite mit axialem Abstand zwei derartige unbelegte Federplattenbereiche 56 vor. Jedem unbelegten Federplattenbereich 56 der einen Federplattenseite liegt ein entsprechender unbelegter Federplattenbereich 56 der anderen Federplattenseite gegenüber.

Auf diese Weise verfügt das Federglied 28 im Bereich der Paare von unbelegten Federplattenbereichen 56 über Bereiche reduzierter Federglieddicke im Vergleich zu den sich axial anschließenden Federgliedbereichen. Während die Federplatte 54 in den belegten Bereichen verstärkt und somit versteift ist, bleibt an den unbelegten Federplattenbereichen 56 die Querbiegbarkeit voll erhalten. Die unbelegten Federplattenbereiche 56 stellen somit eine Art Festkörpergelenke 57 dar, deren Gelenkachsen 58 in der Plattenebene 36 rechtwinkelig zur Längsachse 24 des Federgliedes 28 ausgerichtet sind. Sie gewährleisten weiterhin die erforderliche Querbiegbarkeit.

Die axial gemessene Breite c der unbelegten Federplattenbereiche 56 ist derart gering gewählt, daß die im normalen Betrieb auftretenden Zug- und Schubkräfte keine sich auf die axialen Abmessungen auswirkenden Verformungen hervorrufen können. Die Kupplungseinrichtung 12 verfügt somit über ein axial steifes, im Bereich der Festkörpergelenke 57 jedoch in Querrichtung abbiegbares Federglied 28.

Bevorzugt ist das eine Festkörpergelenk 57 im Bereich der ersten Verbindungsstelle 25 und das andere Festkörpergelenk 57 im Bereich der zweiten Verbindungsstelle 26 angeordnet. Indem zwei beabstandete Festkörpergelenke 57 vorhanden sind, sind Parallelverschiebungen der beiden Teile 13, 17 in Querrichtung 27, d.h. in Längsrichtung der Gelenkachsen 37, 38 möglich, ohne daß sich unzuträgliche Verspannungen einstellen.

Um ausgehend von der Grundstellung der Kupplungseinrichtung 12, bei der das Federglied 28 die Ausgangsstellung einnimmt, nicht nur Relativbewegungen im Sinne einer radialen Entfernung der beiden Teile 13, 17 zu ermöglichen, sondern auch radiale Annäherungsbewegungen, sind entsprechende Freiräume geschaffen, so daß die betreffende Annäherungsbewegung nicht behindert wird. So verfügt das Kraftabgabeteil 17 gegenüber dem Federglied 28 über eine mit Bezug zur Axialrichtung 3 radial insbesondere durchgehende Aussparung 62, die sich mit Ausnahme des Bereiches der zweiten Verbindungsstelle 26 über das gesamte Federglied 28 erstreckt. Eine entsprechende Aussparung 63 befindet sich zwischen dem Federglied 28 und dem Krafteinleitungsteil 13, die sich hier abgesehen von dem Bereich der ersten Verbindungsstelle 25 über das gesamte Federglied 28 hinweg erstreckt. Zumindest der einer jeweiligen Verbindungsstelle 25, 26 entgegengesetzte Bereich des Federgliedes 28 liegt somit frei. Finden nun wie auch immer geartete radiale Annäherungsbewegungen zwischen dem Krafteinleitungsteil 13 und dem Kraftabgabeteil 17 statt, so können die den Verbindungsstellen 25, 26 zugeordneten Endbereiche 64 ungehindert in die zugeordnete Aussparung 62, 63 eintauchen, um die gewünschte Querbewegung zu ermöglichen. Angedeutet ist dies in Figur 3 bei 65. Die Aussparung 63 seitens des Krafteinleitungsteils 13 ist beispielsgemäß von dem sich zur Vorderseite hin an den Quersteg 16 anschließenden Bereich gebildet, der zwischen der Oberseite der Mitnehmerpartie 5 der Unterseite des Federgliedes 28 liegt.

Um der Kupplungseinrichtung 12 in sich eine gewisse Stabilität zu erhalten und um eine stets klar definierte Grundstellung zu gewährleisten, sind das Krafteinleitungsteil 13, das Federglied 28 und das Kraftabgabeteil 17 untereinander durch eine aus Material mit gummielastischen Eigenschaften bestehende Stabilisierungsmasse 66 verbunden. Das Federglied 28 ist vorzugsweise vollständig in diese Stabilisierungsmasse 66 eingebettet. Die Stabilisierungsmasse 66 fixiert die einzelnen Teile 13, 17, 28 in der Grundstellung, ohne jedoch die im Betrieb erforderliche Beweglichkeit zu behindern. Eine für das gwünschte Betriebsverhalten ausreichende begrenzte Flexibilität zwischen den einzelnen Teilen 13, 17, 28 bleibt erhalten.

Partien der Stabilisierungsmasse 66 befinden sich insbesondere an den beiden Endbereichen der Kupplungseinrichtung 12, wo eine gummielastische Abstützung und Lagefixierung zwischen dem Krafteinleitungsteil 13 und dem Kraftabgabeteil 17 erfolgt. Die entsprechenden Partien der Stabilisierungsmasse 66 sind bei 67 angedeutet.

Die Stabiliserungsmasse 66 greift auch in die Zwischenräume zwischen den Versteifungsplatten 55, 55' ein. Sie erstreckt sich außerdem zumindest teilweise in die Aussparung 62. Die Aussparung 63 wird lediglich außen umgrenzt (bei 68), so daß weiterhin Freiraum für die Schwenkbewegung des Federgliedes 28 verbleibt und Freiraum geschaffen ist für das bei den Querbewegungen verformte Material der inkompressiblen Stabilisierungsmasse 66. Durch die in radialer Richtung zur Verfügung stehenden Aussparungen 62, 63 werden Verspannungen durch das inkompressible Werkstoffverhalten der Stabilisierungsmasse bei fluchtungsfehlerbedingten Radialverschiebungen vermindert. Aus diesem Grunde ist auch die Aussparung 62 nicht über ihre gesamte Höhe mit Stabilisierungsmasse 66 ausgefüllt.

Für die Stabilisierungsmasse 66 kann beispielsweise Gummi bzw. sogenanntes NBR-Material verwendet werden. Es wird zweckmäßigerweise aufvulkanisiert. Eine weitere Alternative könnte das Einschäumen mit anderweitigen Füllstoffen darstellen. Die beispielsgemäße Kupplungseinrichtung 12 ist ein Zusatzbauteil, das nach Bedarf an einem Linearantrieb 1 und dem Führungsteil 8 installiert werden kann. Als Verbindungsglieder dienen das Krafteinleitungsteil 13 und das Kraftabgabeteil 17. Denkbar wäre es jedoch auch, unmittelbar das Antriebsteil als Krafteinleitungsteil 13 und unmittelbar das Führungsteil 8 als Kraftabgabeteil 17 vorzusehen. In diesem Falle würde man das Koppelglied 23 über Verbindungsstellen unmittelbar einerseits an dem Antriebsteil 4 und andererseits an dem Führungsteil 8 festlegen.

Die Kupplungseinrichtung 12 ist auch dann einsetzbar, wenn das Antriebsteil 4 eine Kolbenstange ist oder ein sonstiges angetriebenes Teil.

Die Längsführung 7 ist bevorzugt eine externe, nicht zu dem Linearantrieb 1 gehörende Führung. Sie könnte jedoch auch unmittelbarer Bestandteil des Linearantriebes 1 sein und beispielsweise am Gehäuse 2 des Linearantriebes 1 angeordnet sein.

## Patentansprüche

1. Kupplungseinrichtung für Linearantriebe, zur Kopplung des eine Linearbewegung in einer Axialrichtung (3) ausführenden Antriebsteils (4) des Linearantriebes (1) mit einem an einer Längsführung (7) parallel zur Bewegungsrichtung des Antriebsteils (4) längsbeweglich geführten Führungsteil (8),mit einem mit dem Antriebsteil (4) verbundenen oder von diesem gebildeten Krafteinleitungsteil (13), und mit einem mit dem Führungsteil (8) verbundenen oder von diesem gebildeten Kraftabgabeteil (17), wobei das Krafteinleitungsteil (13) und das Kraftabgabeteil (17) über ein dazwischengeschaltetes Koppelglied (23) in Axialrichtung (3) bewegungsgekoppelt sind, **dadurch gekennzeichnet, daß** als Koppelglied (23) ein längliches, in wenigstens einer Querrichtung (27) federelastisch biegbares und bei Beaufschlagung in seiner Längsrichtung (24) unnachgiebiges Federglied (28) vorgesehen ist, das zumindest im wesentlichen in der Axialrichtung (3) ausgerichtet ist, und das an einer ersten Verbindungsstelle (25) an dem Krafteinleitungsteil (13) und an einer zweiten Verbindungsstelle (26) an dem Kraftabgabeteil (17) jeweils in der Axialrichtung (3) unbeweglich festgelegt ist, wobei die beiden Verbindungsstellen (25, 26) axial beabstandet zueinander angeordnet sind, so dass auf Grund der Biegeelastizität des Federgliedes (28) relative Querbewegungen zwischen dem Krafteinleitungsteil (13) und dem Kraftabgabeteil (17) möglich sind.

2. Kupplungseinrichtung nach Anspruch 1, **dadurch gekennzeichnet, daß** das Federglied (28) aus einer plattenartigen, ausschließlich quer zur Plattenebene (36)biegbaren Anordnung besteht.

3. Kupplungseinrichtung nach Anspruch 2, **dadurch gekennzeichnet, daß** das Federglied (28) derart zwischen dem Krafteinleitungsteil (13) und dem Kraftabgabeteil (17) angeordnet ist, daß die eine Plattenfläche (34) dem Kraftabgabeteil (17) und die andere Plattenfläche (35) dem Krafteinleitungsteil (13) zugewandt ist.

4. Kupplungseinrichtung nach einem der Ansprüche 1 bis 3, **dadurch gekennzeichnet, daß** das Federglied (28) derart ausgebildet und angeordnet ist, daß die mögliche Biegebewegung (27) bezüglich der Axialrichtung (3) im wesentlichen radial verläuft.

5. Kupplungseinrichtung nach einem der Ansprüche 1 bis 4, **dadurch gekennzeichnet, daß** das Federglied (28) an den beiden Verbindungsstellen (25, 26) jeweils drehbeweglich bzw. gelenkig mit einem Schwenkfreiheitsgrad (32, 33) an dem zugeordneten Krafteinleitungsteil (13) bzw. Kraftabgabeteil (17) gelagert ist.

6. Kupplungseinrichtung nach Anspruch 5, **dadurch gekennzeichnet, daß** eine jeweilige Gelenkachse (37, 38) einer jeweiligen Verbindungsstelle (25, 26) parallel zu der Ebene der möglichen Querbiegebewegung (27) des Federgliedes (28) verläuft.

7. Kupplungseinrichtung nach Anspruch 5 oder 6, **dadurch gekennzeichnet, daß** das Federglied (28) zur gelenkigen bzw. drehbeweglichen Lagerung über einen spielfrei eingepaßten Gelenkbolzen (42) am zugeordneten Teil (13, 17) festgelegt ist.

8. Kupplungseinrichtung nach einem der Ansprüche 1 bis 7, **dadurch gekennzeichnet, daß** die mögliche Querbiegebewegung (27) des Federgliedes (28)durch zwei axial beabstandete lokale Festkörpergelenke (57) gewährleistet ist, die durch Bereiche reduzierter Federglieddicke definiert sind.

9. Kupplungseinrichtung nach Anspruch 8, **dadurch gekennzeichnet, daß** jeweils ein Festkörpergelenk (57) im Bereich einer der Verbindungsstellen (25, 26) angeordnet ist.

10. Kupplungseinrichtung nach Anspruch 8 oder 9, **dadurch gekennzeichnet, daß** das Federglied (28) über eine die gewünschte Querbiegbarkeit aufweisende, insbesondere aus Federstahl bestehende, bandartig dünne Federplatte (54) verfügt, die wenigstens einseitig und vorzugsweise beidseitig mit Versteifungsplatten (55, 55') belegt ist, die derart angeordnet sind, daß unbelegte Federplattenbereiche (56) verbleiben, die die Festkörpergelenke (57) definieren.

11. Kupplungseinrichtung nach Anspruch 10, **dadurch gekennzeichnet, daß** die Versteifungsplatten (55, 55') mit der Federplatte vernietet, oder auf diese aufgeschweißt oder aufgeklebt sind.

12. Kupplungseinrichtung nach einem der Ansprüche 1 bis 11, **dadurch gekennzeichnet, daß** der Linearantrieb ein kolbenstangenloser Linearantrieb ist.

13. Kupplungseinrichtung nach Anspruch 12, **dadurch gekennzeichnet, daß** das Krafteinleitungsteil (13) an einer an dem Antriebsteil (4) vorgesehenen Mitnehmerpartie (5) vorgesehen ist, die durch einen Längsschlitz (6) aus dem Gehäuse (2) des Linearantriebes (1) herausragt.

14. Kupplungseinrichtung nach einem der Ansprüche 1 bis 13, **dadurch gekennzeichnet, daß** das Krafteinleitungsteil (13), das Federglied (28) und das Kraftabgabeteil (17) durch eine Stabilisierungsmasse (66) aus gummielastischem Material untereinander mit begrenzter Bewegungsmöglichkeit lagefixiert sind.

15. Kupplungseinrichtung nach Anspruch 14, **dadurch gekennzeichnet, daß** das Federglied (28) in die Stabilisierungsmasse (66) eingebettet ist.

16. Kupplungseinrichtung nach Anspruch 14 oder 15, **dadurch gekennzeichnet, daß** die Stabilisierungsmasse anvulkanisiert oder angeschäumt ist.

17. Kupplungseinrichtung nach einem der Ansprüche 14 bis 16, **dadurch gekennzeichnet, daß** Verformungsfreiräume bzw. Aussparungen (62, 63) vorhanden sind, in die bei der Relativbewegung des Krafteinleitungsteils (13) und des Krafabgabeteils (17) verdrängtes Material der Stabilisierungsmasse (66) ausweichen kann.

## Claims

1. Coupling device for linear drives, for coupling the drive section (4) of the linear drive (1) which executes a linear movement in an axial direction (3) to a guide section (8) guided with longitudinal movement on a longitudinal guide (7) parallel to the direction of movement of the drive section (4), with a power initiation section (13) connected to or formed by the drive section (4), and with a power output section (17) connected to or formed by the guide section (8), wherein the power initiation section (13) and the power output section (17) are motion-coupled in the axial direction (3) via an interconnected coupling element (23), **characterised in that** there is provided as coupling element (23) an elongated spring element (28) capable of spring-elastic bending in at least one transverse direction (27) and unyielding if acted upon in its longitudinal direction (24), which is aligned at least substantially in the axial direction (3) and is fixed to a first connection point (25) on the power initiation section (13) and to a second connection point (26) on the power output section (17), in each case immovable in the axial direction (3), wherein the two connection points (25, 26) are arranged axially spaced apart so that, due to the elasticity in bending of the spring element (28), relative transverse movements between the power initiation section (13) and the power output section (17) are possible.

2. Coupling device according to claim 1, **characterised in that** the spring element (28) is comprised of a plate-shaped assembly, bendable only at right-angles to the plane of the plate (36).

3. Coupling device according to claim 2, **characterised in that** the spring element (28) is mounted between the power initiation section (13) and the power output section (17) in such a way that one plate surface (34) faces the power output section (17) and the other plate surface (35) faces the power initiation section (13).

4. Coupling device according to any of claims 1 to 3, **characterised in that** the spring element (28) is mounted and designed in such a way that the possible bending movement (27) runs substantially radially relative to the axial direction (3).

5. Coupling device according to any of claims 1 to 4, **characterised in that** the spring element (28) is supported at the two connection points (25, 26) in each case rotatable and hinged, with a degree of freedom to swivel (32, 33) at the assigned power initiation section (13) or power output section (17) respectively.

6. Coupling device according to claim 5, **characterised in that** each pivot axis (37, 38) of each connection point (25, 26) runs parallel to the plane of the possible transverse bending movement (27) of the spring element (28).

7. Coupling device according to claim 5 or 6, **characterised in that**, for hinged and/or rotatable mounting, the spring element (28) is fixed to the assigned part (13, 17) via a hinge pin (42) fitted so as to be free from play.

8. Coupling device according to any of claims 1 to 7, **characterised in that** the possible transverse bending movement (27) of the spring element (28) is ensured by two local solid joints (57), axially spaced apart, which are defined by areas of reduced spring element thickness.

9. Coupling device according to claim 8, **characterised in that** a solid joint (57) is located in the area of each of the connection points (25, 26).

10. Coupling device according to claim 8 or 9, **characterised in that** the spring element (28) has a ribbon-like thin spring plate (54) made in particular of spring steel and having the desired transverse bendability, which is occupied at least on one and preferably on both sides by reinforcing plates (55, 55'), which are so arranged as to leave unoccupied spring plate areas (56) which define the solid joints (57).

11. Coupling device according to claim 10, **characterised in that** the reinforcing plates (55, 55') are riveted to the spring plate, or welded or glued on to it.

12. Coupling device according to any of claims 1 to 11, **characterised in that** the linear drive is a rodless linear drive.

13. Coupling device according to claim 12, **characterised in that** the power initiation section (13) is located at a driving section (5) provided on the drive section (4) and which extends out from the housing (2) of the linear drive (1) through a longitudinal slot (6).

14. Coupling device according to any of claims 1 to 13, **characterised in that** the power initiation section (13), the spring element (28) and the power output section (17) are fixed in position relative to one another, with limited scope for movement, by a stabilising weight (66) of rubber-elastic material.

15. Coupling device according to claim 14, **characterised in that** the spring element (28) is embedded in the stabilising weight (66).

16. Coupling device according to claim 14 or 15, **characterised in that** the stabilising weight is vulcanised or foamed on.

17. Coupling device according to any of claims 14 to 16, **characterised in that** there are provided deformation spaces or recesses (62, 63) into which the material of the stabilising weight (66) displaced by the relative movement of the power initiation section (13) and the power output section (17) can escape.

## Revendications

1. Dispositif d'accouplement pour dispositifs d'entraînement linéaire, pour l'accouplement de la partie d'entraînement (4) du dispositif d'entraînement linéaire (1), exécutant un mouvement linéaire dans une direction axiale (3), avec une partie de guidage (8) montée déplaçable longitudinalement sur un guide longitudinal (7), parallèlement à la direction de déplacement de la partie d'entraînement (4), comportant une partie d'introduction des forces (13) reliée à la partie d'entraînement (4) ou formée par celle-ci, et comportant une partie de restitution des forces (17) reliée à la partie de guidage (8) ou formée par celle-ci, la partie d'introduction des forces (13) et la partie de restitution des forces (17) étant accouplées en déplacement dans la direction axiale (3), par l'intermédiaire d'un élément d'accouplement (23) monté entre elles, **caractérisé en ce qu'**il est prévu comme élément d'accouplement (23) un élément à ressort (28) allongé, flexible élastiquement au moins dans une direction transversale (27), et non flexible lorsqu'il est sollicité dans sa direction longitudinale (24), qui est orienté au moins sensiblement dans la direction axiale (3), et qui est immobilisé, toujours dans la direction axiale (3), en un premier point de liaison (25) sur la partie d'introduction des forces (13), et en un deuxième point de liaison (26) sur la partie de restitution des forces (17), les deux points de liaison (25, 26) étant disposés à distance axiale l'un de l'autre, de sorte que des mouvements transversaux relatifs entre la partie d'introduction des forces (13) et la partie de restitution des forces (17) sont possibles du fait de l'élasticité en flexion de l'élément à ressort (28).

2. Dispositif d'accouplement selon la revendication 1, **caractérisé en ce que** l'élément à ressort (28) est constitué d'un dispositif de type plaque, flexible exclusivement transversalement au plan (36) de la plaque.

3. Dispositif d'accouplement selon la revendication 2, **caractérisé en ce que** l'élément à ressort (28) est disposé entre la partie d'introduction des forces (13) et la partie de restitution des forces (17) de manière qu'une surface (34) de la plaque soit tournée vers la partie de restitution des forces (17), et l'autre surface (35) de la plaque vers la partie d'introduction des forces (13).

4. Dispositif d'accouplement selon l'une des revendications 1 à 3, **caractérisé en ce que** l'élément à ressort (28) est conformé et disposé de manière que le mouvement de flexion (27) possible par rapport à la direction axiale (3) s'étende sensiblement radialement.

5. Dispositif d'accouplement selon l'une des revendications 1 à 4, **caractérisé en ce que** l'élément à ressort (28) est monté, au niveau de chacun des deux points de liaison (25, 26), de manière mobile en rotation ou de manière articulée, avec un degré de liberté de pivotement (32, 33) par rapport à la partie d'introduction des forces (13) ou à la partie de restitution des forces (17) associée.

6. Dispositif d'accouplement selon la revendication 5, **caractérisé en ce que** chaque axe d'articulation (37, 38) de chaque point de liaison (25, 26) s'étend parallèlement au plan du mouvement de flexion transversale (27) possible de l'élément à ressort (28).

7. Dispositif d'accouplement selon la revendication 5 ou 6, **caractérisé en ce que** pour le montage articulé ou mobile en rotation, l'élément à ressort (28) est fixé sur la partie (13, 17) associée, par l'intermédiaire d'un axe d'articulation (42) ajusté sans jeu.

8. Dispositif d'accouplement selon l'une des revendications 1 à 7, **caractérisé en ce que** le mouvement de flexion transversale (27) possible de l'élément à ressort (28) est assuré par deux articulations à corps fixe (57) locales, espacées axialement, qui sont définies par des zones d'épaisseur réduite de l'élément à ressort.

9. Dispositif d'accouplement selon la revendication 8, **caractérisé en ce qu'**une articulation à corps fixe (57) est disposée respectivement dans la zone de chacun des points de liaison (25, 26).

10. Dispositif d'accouplement selon la revendication 8 ou 9, **caractérisé en ce que** l'élément à ressort (28) comporte une plaque de ressort (54) mince de type ruban, qui présente la flexibilité transversale voulue et qui est constituée notamment en acier à ressort, laquelle est pourvue au moins sur une face et de préférence sur les deux faces, de plaques de renfort (55, 55') qui sont disposées de manière qu'il subsiste des zones de la plaque de ressort (56) non recouvertes qui définissent les articulations à corps fixe (57).

11. Dispositif d'accouplement selon la revendication 10, **caractérisé en ce que** les plaques de renfort (55, 55') sont rivées à la plaque de ressort, ou soudées ou collées sur celle-ci.

12. Dispositif d'accouplement selon l'une des revendications 1 à 11, **caractérisé en ce que** le dispositif d'entraînement linéaire est un dispositif d'entraînement linéaire sans tige de piston.

13. Dispositif d'accouplement selon la revendication 12, **caractérisé en ce que** la partie d'introduction des forces (13) est prévue sur une partie entraîneur (5) prévue sur la partie d'entraînement (4), et qui ressort du boîtier (2) du dispositif d'entraînement linéaire (1) à travers une fente oblongue (6).

14. Dispositif d'accouplement selon l'une des revendications 1 à 13, **caractérisé en ce que** la partie d'introduction des forces (13), l'élément à ressort (28) et la partie de restitution des forces (17) sont fixés dans leur position, avec une possibilité limitée de déplacement l'un par rapport à l'autre, au moyen d'une masse de stabilisation (66) en une matière présentant l'élasticité du caoutchouc.

15. Dispositif d'accouplement selon la revendication (14), **caractérisé en ce que** l'élément à ressort (28) est noyé dans la masse de stabilisation (66).

16. Dispositif d'accouplement selon la revendication 14 ou 15, **caractérisé en ce que** la masse de stabilisation est rapportée par vulcanisation ou expansion.

17. Dispositif d'accouplement selon l'une des revendications 14 à 16, **caractérisé en ce qu'**il existe des espaces libres de déformation ou des découpes (62, 63) dans lesquels la matière de la masse de stabilisation (66), refoulée lors du mouvement relatif de la partie d'introduction des forces (13) et de la partie de restitution des forces (17), peut s'engager.
